**Europäisches Patentamt**

**European Patent Office**

**Office européen des brevets**

(19)

(11) Publication number: **0 103 335**

**B1**

(12) # EUROPEAN PATENT SPECIFICATION

(45) Date of publication of patent specification: **18.03.87**

(21) Application number: **83201280.1**

(22) Date of filing: **06.09.83**

(51) Int. Cl.⁴: **H 04 Q 3/68,** H 04 Q 11/04, H 04 L 11/00, G 06 F 15/16

(54) **Circuit arrangement for the exchange of messages within a telecommunication system consisting of a plurality of modular units.**

(30) Priority: **13.09.82 US 417371**

(43) Date of publication of application: **21.03.84 Bulletin 84/12**

(45) Publication of the grant of the patent: **18.03.87 Bulletin 87/12**

(84) Designated Contracting States: **BE DE FR GB IT NL SE**

(56) References cited:
FR-A-2 335 896
GB-A-2 027 564
US-A-4 228 536
US-A-4 345 325

PROCEEDINGS OF THE NATIONAL ELECTRONICS CONFERENCE, vol. XXXIII, 29th-31st October 1979, pages 55-59, Chicago, US H. CORNLEY et al.: "ROLM VLCBX system overwiew"

(73) Proprietor: **ITALTEL SOCIETA ITALIANA TELECOMUNICAZIONI s.p.a.**
**P.le Zavattari, 12**
**I-20149 Milano (IT)**

(72) Inventor: **Israel, John W.**
**3611 Dartmouth Avenue**
**Dallas Texas 25205 (US)**

(74) Representative: **Coggi, Giorgio**
**ITALTEL Società Italiana Telecomunicazioni s.p.a. (Servizio Brevetti) Via A. di Tocqueville 13 I-20154 Milano (IT)**

Courier Press, Leamington Spa, England.

## Description

The present invention relates to a circuit arrangement adapted to perform the exchange of messages in an asynchronous way among a plurality of modular units, e.g. forming a switching telephone exchange and full-mesh connected with one another.

The published European Patent Application No. 73078 (publication date: March 2, 1983) relates to a switching telephone exchange consisting of a plurality of modular units where each modular unit comprises switching and control means, the latter being formed by a microprocessor.

According to already known arrangements, a plurality of units comprising a microprocessor can exchange messages. One of these arrangements provides that each microprocessor be equipped with a software structure adapted to cyclically interrogate the reception channels in order to detect whether one of the modular units in the system is providing a message destined thereto.

According to a further arrangement, the microprocessor of the modular unit destined to emit a message generating a request for the interruption of the operative program of the microprocessor belonging to the modular unit which the message is destined to.

When the microprocessor of the reception modular unit is ready to deal with the said interruption request, it recovers the message.

Such procedures of message transfer present the drawback that they require the engagement of at least one of the two microprocessors concerned by said operation until it has finished the procedure of recovery of a message by the microprocessor belonging to the modular unit of destination. Thus, the time spent by the microprocessors to transfer the messages results to be non-negligible and this rate slightly reduces the time at their disposal for performing other operations, such as processing operations, etc.

The purpose of the present invention is to provide a circuit arrangement adapted to perform said exchange of messages minimizing the engagement time of the two microprocessors concerned by said operation.

The object of the present invention is therefore a circuit arrangement for use in a telecommunication system formed by a plurality of modular units which are full-mesh connected with one another by means of full-duplex path: each of said modular units comprises at least a circuit arrangement and a microprocessor.

The modular units exchange digital messages in an asynchronous way. A telecommunication system of the type described above is known in the art.

According to the present invention, the circuit arrangement comprises a transmitting and a receiving section; the microprocessor controls the emission of a departing digital message by the transmitting section and handles the arriving digital messages reaching the receiving section.

The transmitting section of each circuit arrangement is linked with the receiving section of each other modular unit of the telecommunication system by means of a respective outgoing line, the receiving section of each circuit arrangement is linked with the transmitting section of each other modular unit of the telecommunication system by means an incoming line constituting the outgoing line of said other modular unit.

Each of said full-duplex path includes a signalling and a response wire.

The circuit arrangement according to the invention allows to comply with the stated requirements. In fact, after having transferred the message into the transmitting section associated therewith, the microprocessor of the emitting modular unit is able to perform other operations without having to wait for the completion of the recovery of the message by the modular unit of destination.

Similarly, the microprocessor of the modular unit of destination is only engaged for the recovery time of the message, considering that the message is recovered when it is already inside the modular unit of destination.

Further characteristics of the solution will appear from the following description of a nonlimiting embodiment and with reference to the attached drawings in which:

Figure 1 shows a telecommunication system consisting of a plurality of modular units full-mesh connected each to the other;

Figure 2 shows the circuits of modular unit $MO_1$ of figure 1 in accordance with the invention.

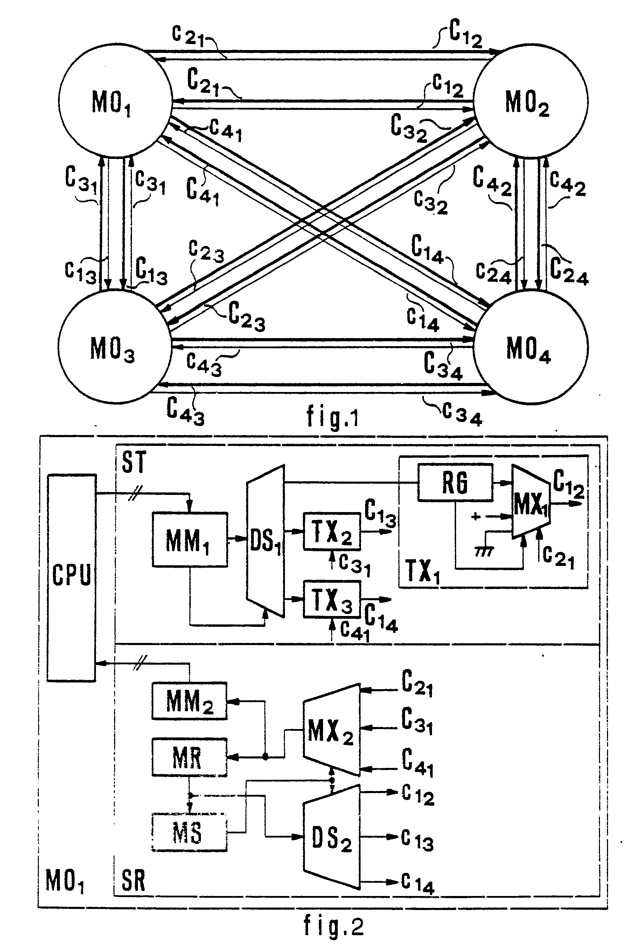

According to figure 1, $MO_1 \ldots, MO_4$ indicate as many modular units forming a telecommunication system such as a switching telephone exchange of modular type. Modules MO are full-mesh connected each to the other via a full-duplex path comprising a communication channel C for each transmission way. In figure 1 the communication channels have been represented by a marked line and countersigned by a pair of numbers indicating the transmitting modular unit and the receiving modular unit, respectively.

Moreover, each modular unit MO provides the presence of a connection $c$ to each of the remaining modular units forming a signal channel associated with a respective transmission channel C through which the receiving modular unit supplies the transmitting modular unit with the activation signal $c$ for the emission of the message on the relative communication channel.

In the assumption that modular unit $MO_1$ must send a message to modular unit $MO_4$, said modular unit $MO_1$ applies a data-ready signal of prefixed polarity on wire $C_{1_4}$; the modular unit $MO_4$ cyclically scans channels $C_{1_4}$, $C_{2_4}$ and $C_{3_4}$ and when it detects the presence of said data-ready signal on channel $C_{1_4}$, it stops the scanning, remains connected to said channel $C_{1_4}$ and supplies modular unit $MO_1$ with an activation signal for the transmission of the message by way of the signal channel $C_{1_4}$.

In response to the reception of said activation control, the modular $MO_1$ emits the message on channel $C_{14}$, thus allowing the relative recovery by module $MO_4$.

The exchange of messages occurs in an asynchronous way and the engagement time of the microprocessors of the pair of modular units involved in the message transfer is reduced to a minimum, as explained hereinafter in the description of the circuitry of a given modular unit MO illustrated in figure 2.

Figure 2 shows the circuit arrangement realized according to the invention and provided in each of the modular units of figure 1.

In this figure, CPU indicates the microprocessor forming the control unit of the modular unit which is designed to exchange messages with units CPU of the remaining modular units.

In case the modular units form a switching telephone exchange, the aforesaid messages comprise, for example, the data referring to the establishment or control of a telephone connection.

Unit CPU is connected to the circuit arrangement according to the invention, which comprises a transmitting section ST and a receiving section SR.

The transmitting section includes storage means $MM_1$, into which unit CPU transfers in parallel the bits of a given message which mainly comprises a first field of bits relative to the information bits and a second field of bits containing the address of the receiving modular unit.

The address bits of the second field are applied to the control input of a signal distributor $DS_1$ which, assuming that the system is formed by four modular units (figure 1), provides the presence of three outputs which are associated with channels $C_{12}$, $C_{13}$ and $C_{14}$ with all the other modular units. Thus, unit $DS_1$ serially distributes the message contained in the storage means $MM_1$ to one of the transmission units TX connected therewith.

Figure 2 shows in detail only the unit $TX_1$ which provides a register RG designed to activate one of its outputs in response to the reception of a message and said output is connected to the control input of a multiplexer $MX_1$.

Unit $MX_1$ has a first data input connected to the data output of register RG, a second data input which is applied to a prefixed polarity (e.g. +5V) and a third data input connected to ground.

When register RG has to messages at its disposal, unit $MX_1$ applies the ground potential on the respective wire C, while the reception of a message by unit RG, destined for example to modular unit $MO_2$, determines the activation of said output and consequently a modification in the address bits of unit $MX_1$ which informs the modular unit $MO_2$ of the presence of a message destined thereto by applying the said potential on wire $C_{12}$.

Wires C reach the input of multiplexer $MX_2$ comprised in the receiving section SR of each modular unit. The control input of unit $MX_2$ receives the outputs of the scanning means MS arranged to establish the cyclic connection of wires C with means MR adapted to detect the presence of said polarity as well as to emit a stop signal of the scanning means MS when the detection gives a positive result.

The signal generated by units MR is also applied to the input of a signal distributor $DS_2$, which is also addressed by the outputs of scanning means MS.

Unit $DS_2$ is applied to said wires $c$ so that, in the assumption that the modular unit $MO_4$ has indicated the presence of a message destined to modular unit $MO_1$, unit MR stops the scanning when channel $C_{41}$ is addressed and unit $DS_2$ sends the said activation signal on wire $C_{14}$ thus enabling modular unit $MO_4$ to transmit the message.

The message reaches modular unit $MO_1$ through channel $C_{41}$ and is sent to the input of the storage means $MM_2$ by way of unit $MX_2$.

It is then transferred in parallel to unit CPU. It is clear that the engagement time of the two microprocessors involved in the transfer of a message is reduced to the minimum, since the transfer is mainly dealt with by the circuit arrangement according to the invention, particularly by the transmitting section of the emitting modular unit and by the receiving section of the modular unit of destination.

**Claims**

1. A circuit arrangement adapted to exchange messages within a telecommunication system consisting of a plurality of modular units (MO) full-mesh connected via full-duplex paths (C, c), each modular unit comprising at least a microprocessor (CPU) and said circuit arrangement, characterized in that said circuit arrangement comprises a transmitting section (ST) and a receiving section (SR), said microprocessor (CPU) controlling the emission of a departing digital message by said transmitting section (ST) and handling arriving digital messages reaching said receiving section (SR); in that the transmitting section (ST) of each circuit arrangement is linked with the receiving section (SR) of each other modular unit (MO) of the system by a respective outgoing line and in that the receiving section (SR) of each circuit arrangement is linked with the transmitting section (ST) of each other modular unit (MO) of the system by an incoming line constituting the outgoing line of such other modular unit, each of said lines including a signaling wire (C) and a response wire (c); further characterized in that the transmitting section (ST) of each circuit arrangement comprises first memory means ($MM_1$) loadable by the associated microprocessor (CPU) with departing messages including address bits designating the modular unit (MO) destined to receive the respective message, selection means ($DS_1$) connected to said first memory means ($MM_1$) for sending out a data-ready signal on the signaling wire (C) of the outgoing line leading to the designated modular unit (MO) and switching means (MX$_1$) responsive to an acknowlegment signal on the response wire (c) of the same line for replacing said data-ready signal by information bits stored in said first memory means (MM$_1$) as part of the message destined for the designated modular unit (MO) and in that the receiving section (SR) of each modular unit (MO) comprises scanning means (MS) for continuously exploring the signaling wires (C) of all incoming lines to detect the presence of a data-ready signal thereon, signal generating means (MR) connectable by said scanning means (MS) to the response wire (C) of each incoming line whose signaling wire (C) is being explored to emit said acknowledgment signal thereover upon detection of said data-ready signal, with temporary halting of the exploration of said signaling wires (C) by said scanning means (MS) in response thereto, and second memory means (MM$_2$) connectable by said scanning means (MS) to the momentarily explored signaling wire (C) for temporarily storing information bits arriving thereover during the temporary halt of said exploration, preparatorily to delivering said information to the associated microprocessor (CPU).

2. A circuit arrangement as defined in claim 1 characterized in that said selection means comprises a first demultiplexer (DS$_1$) provided with a number of outputs respectively assigned to all other modular units of the system, said first demultiplexer (DS$_1$) being controlled by the address bits stored in said first memory means (MM$_1$) for connecting an information-bit output thereof to the output assigned to the designated modular unit (MO), each of said outputs extending to a respective signaling circuit (TX) including a register (RG) loadable with the information bits of a departing message read out from said first memory means (MM$_1$), said switching means comprising a first multiplexer (MX$_1$) in each signaling circuit (TX) settable by the presence of information bits in said register (RG) for sending out said data-ready signal over the respective signaling wire (C) and further settable by the arrival through the related response wire (c) of said acknowledgment signal for reading out the contents of said register (RG) to the respective signaling wire (C); said receiving section (SR) further comprising a second multiplexer (MX$_2$) and a second demultiplexer (DS$_2$) jointly settable by said scanning means (MS) for concurrently connecting an input of said signal-generating means (MR) in parallel with said second memory means (MM$_2$) to the explored signaling wire (C) and an output of said signal-generating means (MR) to the corresponding response wire (c), said scanning means (MS) having a control input connected to the output of said signal-generating means (MR) for receiving a halting command therefrom upon detection of a data-ready signal.

3. A circuit arrangement as defined in claim 2 characterized in that said first multiplexer (MX$_1$) normally grounds the respective signaling wire (C), said data-ready signal being a potential of predetermined polarity applied from a source thereof to the respective signaling wire (C) by said first multiplexer (MX$_1$).

## Patentansprüche

1. Schaltungsanordnung fuer den Nachrichtenaustausch in einem Fernmeldesystem, die aus einer Mehrzahl von modularen Einheiten (MO) besteht, welche durch Gegenschreibschaltungen (C,c) maschenverbunden sind und jede modulare Einheit wenigstens einen Rechner (CPU) und die genannte Schaltungsanordnung enthaelt, dadurch gekennzeichnet, dass diese Schaltungsanordnung ein Sende- (ST) und ein Empfangsfeld (SR) enthaelt und, dass der genannte Rechner (CPU) die Ausgabe von einer vom Sendefeld (ST) kommenden digitalen Meldung ueberwacht und die and das Empfangsfeld (SR) ankommenden digitalen Meldungen (ST) behandelt; und, dass das Sendefeld (ST) jeder Schaltungsanordnung mit dem Empfangsfeld jeder anderen modularen Einheit (MO) des ganzen Systems ueber die jeweiligen ausgehende Leitung verbunden ist, und, dass das Empfangsfeld (SR) jeder Schaltunganordnung mit dem Sendfeld (ST) jeder anderen modularen Einheit (MO) ueber eine ankommende Leitung verbunden ist, welche die ausgehende Leitung solcher anderen modularen Einheiten bildet und jeder dieser Leitungen einen Signal- (C) und einen Frequenzdraht (c) enthaelt; und dadurch weiter gekennzeichnet, dass das Sendefeld (ST) jeder Schaltungsanordnung erste Speichermittel (MM$_1$) enthaelt, welche von einem zugeordneten Rechner (CPU) durch ausgehende Meldungen geladen werden, und diese Meldungen auch Adressebits fuer die Bezeichnung der zum Empfang der entsprechenden Meldung bestimmten modularen Einheit (MO) enthaelt; Selektionsmittel (DS), mit den genannten ersten Speichermitteln (MM$_1$) verbunden, welche ein Bestaetigungssignal zu dem Frequenzdraht (C) der ausgehenden Leitung aussenden sollen und Schaltungsmittel (MX) fuer die Ausloesung eines Bestaetigungssignal zu dem Frequenzadraht (c) derselben Leitung, um das Rechenbereitsignal durch die in den genannten ersten Speichermitteln (MM$_1$) gespeicherten Informationsbits, als Teil der zu der modularen Einheit bestimmten Meldung, zu ersetzen und, dass das Empfangsfeld (SR) jeder modularen Einheit (MO) Abtastmittel (MS) fuer die konstante Abtastung der Signaldrahten (C) aller ankommenden Leitungen enthaelt, und die Abtastmittel eventuelles Rechenbereitsignal auffinden sollen; Signalerzeugungsmittel (MR), welche ueber die genannten Abtastmittel (MS) mit dem Frequenzdraht (c) jeder ankommenden Leitung verbunden werden koennen, wobei der Signaldraht (C) der ankommenden Leitungen abgetastet wird, um die Bestaetigungssignal bei der Auffindung des Rechenbereitsignals auszuloesen, indem die Abtastmittel (MS) die Abtastung der genannten Signaldrahten (C) zeitweilig halten und zweite Speichermittel (MM$_2$), welche ueber

die genannten Abtastmittel (MS) mit den momentan abgetasten Signaldrahten (C) verbunden sind, um die waehrend der zeitweiligen Abtastungseinstellung ankommenden Informationsbits zu speichern, als Vorarbeit fuer die Sendung dieser Informationsbits an den zugeordneten Rechner (CPU).

2. Schaltungsanordnung gemaess Anspruch 1, dadurch gekennzeichnet, dass die Selektionsmittel ein erstes Demultiplexgeraet ($DS_1$) enthalten, welches eine Nummer von mit den anderen modularen Einheiten des Systems verbundenen Ausgaengen aufweisst, dass dieses erste Demultiplexgeraet von den in den ersten Speichermitteln ($MM_1$) gespeicherten Adressebits gesteuert wird, um einem Informationsbitausgang mit dem zu der bestimmten modularen Einheit (MO) zugeteilten Ausgang zu verbunden, dass jeder dieser Ausgaenge sich zu einer entsprechenden Signalleitung (TX) ausdehnt und ein Register (RG) enthaelt, welches mit den von einer von diesen ersten Speichermitteln ($MM_1$) auskommenden Meldung Informationsbits geladet wird und, dass diese Schaltungsmittel ein erste Multiplexgeraet ($MX_1$) in jeder Signalleitung (TX) enthaelt, welches durch die Informationsbits dieser Registriermittel (RG) einstellbar ist, um das Rechenbereitsignal ueber den entsprechenden Signaldraht (C) sowie auch beim Empfang von diesem Bestaetigungssignal ueber den entsprechenden Frequenzdraht (C) weiter einzustellen, damit der Speicherinhalt von diesem Register (RG) dem entsprechenden Signaldraht (C) aussendet wird; und, dass solches Empfangsfeld (SR) ein zweites Multiplexgeraet ($MX_2$) und ein zweites Demultiplexgeraet ($DS_2$) enthaelt, welche durch die genannten Abtastmittel (MS) einstellbar sind, um einem Eingang dieser Signalerzeugungsmittel (MR) mit den zweiten Speichermitteln ($MM_2$) ueber den abgetasteten Signaldraht (C) parallelzuschalten und um einen Ausgang dieser Signalerzeugungsmittel (MR) mit dem entsprechenden Frequenzdraht (C), weiter zu verbinden, und, dass diese Abtastmittel (MS) einen mit dem Ausgang dieser Signalerzeugungmittel (MS) verbundenen Steuereingang enthalten, um einen Einstellbefehl bei der Auffindung von dem Rechenbereitsignal zu erhalten.

3. Schaltungsanordnung gemaess Anspruch 2, dadurch gekennzeichnet, dass ueblich das erste Multiplexgeraet ($MX_1$), den jeweligen Signaldraht (C) erdet und die genannten Rechenbereitsignale das Potential von vorausbestimmter Polaritaet bilden, und dieses Potential von einer Quelle ueber das genannte erste Multiplexgeraet ($MX_1$) an den jeweiligen Signaldraht (C) angelegt wird.

**Revendications**

1. Un circuit adapté pour l'échange de messages dans un système de télécommunications composé de différentes unités modulaires (MO), connectées par maille pleine à travers des parcours full-duplex (C,c), chaque unité modulaire comprenant au moins un micro-processeur (CPU) er le dit circuit, caractérisé par la fait que le dit circuit contient une section émettrice (ST) et une section réceptrice (SR), dite micro-processeur (CPU) contrôlant l'émission par la section émettrice (ST) d'un message digital en sortie et traitant les messages digitaux en arrivée à la dite section réceptrice (SR); par le fait que la section émettrice (ST) de chacun des circuits est liée à la section réceptrice (SR) de chacune des autres unités modulaire (MO) du système par une respective ligne en sortie, et par le fait que la section réceptrice (ST) de chacune des autres unités modulaires (MO) du système par une ligne en entrée composant la ligne en sortie de cette autre unité modulaire, chacune de ces lignes incluant un fil de signalisation (C) et un fil de réponse (c); caractérisé en outre par le fait que la section émittrice (ST) de chaque circuit comprend les premiers moyens de mémoire ($MM_1$) qu'il est possible de charger au moyen du microprosseur associé (CPU) avec des messages de départ, incluant des bits d'adresse désignant l'unité modulaire (MO) à laquelle est destinée le message, des moyens de sélection ($DS_1$) connectés aux dits premiers moyens de mémoire ($MM_1$) pour envoyer un signal de 'données prêtes' au fil de signalisation (C) de la ligne en sortie menant à l'unité modulaire désignée (MO) et des systèmes d'interrupteurs ($MX_1$) sensibles à un signal de reconnaissance sur le fil de réponse (c) de la même ligne pour remplacer le signal de 'données prêtes' par des bits d'information stockés dans la dite première mémoire ($MM_1$) comme partie du message destiné à l'unité modulaire désignée (MO), et par le fait que la section réceptrice (SR) de chaque unité modulaire (MO) comprend des moyens d'exploration pour explorer en continuation les fils de signalisation (C) de toutes les lignes en entrée afin d'y détecter la présence d'un signal de 'données prêtes', moyens de génération de signaux (MR) qui peuvant être connectés par les dits moyens d'exploration (MS) au fil de réponse (c) de chaque ligne en éntrée dont chaque fil de signalisation (C) est exploré pour émettre le dit signal de reconnaissance après détection du dit signal de 'données prêtes', avec arrêt temporaire de l'exploration des dits fils de signalisation (C) par les dits moyens d'exploration (MS) en réponse à cela, et des seconds moyens de mémoire ($MM_2$) qu'il est possible de connecteur par les dits moyens d'exploration (MS) au fil de signalisation momentanément exploré (C) pour stocker temporairement les bits d'information y arrivant durant la pause temporaire de la dite exploration, en préparation à la livraison de bits d'information au micro-processeur associé (CPU).

2. Un circuit, comme décrit à la revendication 1, caractérisé par le fait que le moyen de sélection comprend un premier demultiplexeur ($DS_1$) pourvu d'un nombre de sorties respectivement assignées à toutes les autres unités modulaires du système, le dit premier démultiplexeur ($DS_1$) étant contrôlé par les bits d'adresse stockés dans les dits premiers moyens de mémoire ($MM_1$) pour connecteur une de ces sorties de bit d'information à la sortie assignée à l'unité modulaire désignée (MO), chacune de ces sorties s'étendant à un respectif circuit de signalisation (TX) incluant un registre (RG) qu'il est possible de charger avec les bits d'information d'un message au départ extrait des premiers moyens de mémoire (MM₁), le dit moyen de commutation comprenant un premier multiplexeur (MX₁) dans chaque circuit de signalisation (TX) qu'il est possible de régler par la présence de bits d'information dans le dit registre (RG) pour envoyer le signal de 'données prêtes' au moyen des respectifs fils de signalisation (C) et ensuite par l'arrivée à travers le fil de réponse associé (c) du dit signal de reconnaissance pour lire le contenu du dit registre (RG) aux respectifs fils de signalisation (C); la dite section de réception (SR) comprenant en outre un second multipleur (MX₂) et en second démultiplexeur (DS₂) qu'il est possible de monter ensemble par le dit système d'exploration (MS) pour connecter simultanément une donnée en entrée des dits moyens de génération de signal (MR) parallèlement aux dits seconds moyens de mémoire (MM₂) au fil de signalisation exploré, et une donnée en sortie des dits moyens de génération de signal (MR) aux fils de réponse correspondants (c), les dits moyens d'exploration (MS) ayant une entrée de contrôle connectée à la sortie des dits moyens de génération de signal (MR) pour recevoir un ordre de pause de ceux-ci après détection d'un signal de 'données prêtes'.

3. Un circuit comme défini à la revendication 2, caractérisé par le fait que le premier multiplexeur (MX₁) met normalement les fils de signalisation respectifs (C) à terre, le dit signal de'donnée prêté étant un potentiel de polaritè pré-déterminée provenant d'une de ces sources et appliquée au fil de signalisation respectif (C) par le dit premier multiplexeur (MX₁).

fig.1

fig.2